# EUROPEAN PATENT SPECIFICATION

(11) **EP 3 488 186 B1**
(45) Date of publication and mention of the grant of the patent: **14.04.2021**
(21) Application number: 17746306.4
(22) Date of filing: 20.07.2017
(51) Int. Cl.: G01C 21/34, G06Q 10/08, G06Q 50/28, G06Q 10/04

(54) **COLD CHAIN TRANSPORTATION ROUTE MODELING SYSTEM**
KÜHLKETTENTRANSPORTROUTENMODELLIERUNGSSYSTEM
SYSTÈME DE MODÉLISATION DES ITINÉRAIRES DE TRANSPORT FRIGORIFIQUE

(30) Priority: 22.07.2016 US 201662365672 P
(43) Date of publication of application: 29.05.2019
(73) Proprietor: Carrier Corporation, Jupiter, FL 33478 (US)
(72) Inventor: BEASLEY, Marc, Beverly, Massachusetts 01915 (US); CHOPKO, Robert A., Baldwinsville, NY 13027 (US); POOLMAN, Ciara, Syracuse, New York 13057 (US); CRONIN, John, Williston, Vermont 05495 (US); BODKIN, Joseph George, Williston, Vermont 05495 (US)
(74) Representative: Dehns
(86) International application number: PCT/US2017/043049
(87) International publication number: WO 2018/017818

(56) References cited:
- US-A1- 2010 036 610
- US-A1- 2016 196 527

## Description

### BACKGROUND OF THE DISCLOSURE

The embodiments disclosed herein generally relate to cold chain distribution systems, and more specifically to an apparatus and a method for transporting perishable goods.

Typically, cold chain distribution systems are used to transport and distribute perishable goods and environmentally sensitive goods (herein referred to as perishable goods) that may be susceptible to temperature, humidity, and other environmental factors. Perishable goods may include but are not limited to fruits, vegetables, grains, beans, nuts, eggs, dairy, seed, flowers, meat, poultry, fish, ice, and pharmaceuticals. Advantageously, cold chain distribution systems allow perishable goods to be effectively transported and distributed without damage or other undesirable effects.

Refrigerated trucks and trailers are commonly used to transport perishable goods in a cold chain distribution system. A transport refrigeration system is mounted to the truck or to the trailer in operative association with a cargo space defined within the truck or trailer for maintaining a controlled temperature environment within the cargo space.

Conventionally, transport refrigeration systems used in connection with refrigerated trucks and refrigerated trailers include a transport refrigeration unit having a refrigerant compressor, a condenser with one or more associated condenser fans, an expansion device, and an evaporator with one or more associated evaporator fans, which are connected via appropriate refrigerant lines in a closed refrigerant flow circuit. Air or an air/ gas mixture is drawn from the interior volume of the cargo space by means of the evaporator fan(s) associated with the evaporator, passed through the airside of the evaporator in heat exchange relationship with refrigerant whereby the refrigerant absorbs heat from the air, thereby cooling the air. The cooled air is then supplied back to the cargo space.

Farmers are becoming increasingly concerned with the route their perishable goods may take to the store. Cost is certainly one concern but also the risk to the perishable goods along the route is a concern. Once perishable goods leave the farm, farmers often have little control over how their food is transported, which means months of meticulously caring for the perishable goods up until harvest may go to waste because of faulty transportation. Improved systems for picking travel routes for perishable goods would provide benefits to the industry

Document US2016196527 A1 discloses a quality management system configured to notify a user regarding environmental conditions and remaining shelf life prediction for mobile items that are in transit. Based on these alerts, quality- driven shipment decisions may be made or adapted. For example, a different route may be chosen, or the temperature within a vehicle may be adjusted to reduce the predicted spoilage of a mobile item.

Document US2010036610 A1 discloses navigation systems configured to minimize a risk of criminal activity during a transport of cargo along a route.

### BRIEF DESCRIPTION OF THE DISCLOSURE

According to a first aspect of the invention, a system for determining transportation for perishable goods according to claim 1 is provided.

In addition to one or more of the features described above, or as an alternative, further embodiments of the system may include a user device configured to transmit the user parameters to the storage device and receive the output parameters from the route management system.

In addition to one or more of the features described above, or as an alternative, further embodiments of the system may include at least one sensor configured to monitor the perishable good parameters and transmit the perishable good parameters to the storage device.

In addition to one or more of the features described above, or as an alternative, further embodiments of the system may include that the route determination module is configured to adjust a potential route in response to the perishable good parameters.

In addition to one or more of the features described above, or as an alternative, further embodiments of the system may include that the cost module is configured to adjust the cost parameters in response to the perishable good parameters.

In addition to one or more of the features described above, or as an alternative, further embodiments of the system may include that the risk analysis module is configured to adjust the risk parameters in response to the perishable good parameters.

In addition to one or more of the features described above, or as an alternative, further embodiments of the system may include that the output parameters include at least one of a cost comparison of potential routes and a risk comparison of potential routes.

In addition to one or more of the features described above, or as an alternative, further embodiments of the system may include that a user device that activates an alarm when the output parameters are adjusted.

In addition to one or more of the features described above, or as an alternative, further embodiments of the system may include that the user parameters include adjustments to the potential route.

In addition to one or more of the features described above, or as an alternative, further embodiments of the system may include that the potential route may be selected using a user device.

According to another aspect of the invention, a method for determining transportation for perishable goods according to claim 6 is provided.

In addition to one or more of the features described above, or as an alternative, further embodiments of the method may include transmitting, using a user device, user parameters to the storage device.

In addition to one or more of the features described above, or as an alternative, further embodiments of the method may include receiving, using a user device, output parameters from the route management system.

In addition to one or more of the features described above, or as an alternative, further embodiments of the method may include monitoring, using at least one sensor, perishable good parameters; and transmitting the perishable good parameters to the storage device.

In addition to one or more of the features described above, or as an alternative, further embodiments of the method may include adjusting, using the route determination module, a potential route in response to the perishable good parameters.

In addition to one or more of the features described above, or as an alternative, further embodiments of the method may include adjusting, using the cost determination module, the cost parameters in response to the perishable good parameters.

In addition to one or more of the features described above, or as an alternative, further embodiments of the method may include adjusting, using the risk determination module, the risk parameters in response to the perishable good parameters.

In addition to one or more of the features described above, or as an alternative, further embodiments of the method may include activating, using a user device, an alarm when the output parameters are adjusted.

In addition to one or more of the features described above, or as an alternative, further embodiments of the method may include selecting, using a user device, the potential route.

In addition to one or more of the features described above, or as an alternative, further embodiments of the method may include adjusting, using a user device, the potential route.

According to another aspect of the invention, a computer program product tangibly embodied on a computer readable medium according to claim 12 is provided.

In addition to one or more of the features described above, or as an alternative, further embodiments of the computer program may include that the operations further include: transmitting, using a user device, user parameters to the storage device.

In addition to one or more of the features described above, or as an alternative, further embodiments of the computer program may include that the operations further include: receiving, using a user device, output parameters from the route management system.

In addition to one or more of the features described above, or as an alternative, further embodiments of the computer program may include that the operations further include: monitoring, using at least one sensor, perishable good parameters; and transmitting the perishable good parameters to the storage device.

In addition to one or more of the features described above, or as an alternative, further embodiments of the computer program may include that the operations further include: adjusting, using the route determination module, a potential route in response to the perishable good parameters.

In addition to one or more of the features described above, or as an alternative, further embodiments of the computer program may include that the operations further include: adjusting, using the cost determination module, the cost parameters in response to the perishable good parameters.

In addition to one or more of the features described above, or as an alternative, further embodiments of the computer program may include that the operations further include: adjusting, using the risk determination module, the risk parameters in response to the perishable good parameters.

In addition to one or more of the features described above, or as an alternative, further embodiments of the computer program may include that the operations further include: activating, using a user device, an alarm when the output parameters are adjusted.

In addition to one or more of the features described above, or as an alternative, further embodiments of the computer program may include that the operations further include: adjusting, using a user device, the potential route.

In addition to one or more of the features described above, or as an alternative, further embodiments of the computer program may include that the operations further include: selecting, using a user device, the potential route.

Technical effects of embodiments of the present disclosure include determining potential routes for perishable goods and analyzing each route based on cost and risk.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter which is regarded as the disclosure is particularly pointed out and distinctly claimed in the claims at the conclusion of the specification. The foregoing and other features and advantages of the disclosure are apparent from the following detailed description taken in conjunction with the accompanying drawings in which:
FIG. 1 illustrates a schematic view of a system for determining transportation for perishable goods, according to an embodiment of the present disclosure;
FIG. 2 illustrates a schematic view of a cold chain distribution system that may incorporate embodiments of the present disclosure; and
FIG. 3 is a flow diagram illustrating a method for determining transportation for perishable goods, according to an embodiment of the present disclosure.

### DETAILED DESCRIPTION OF THE DISCLOSURE

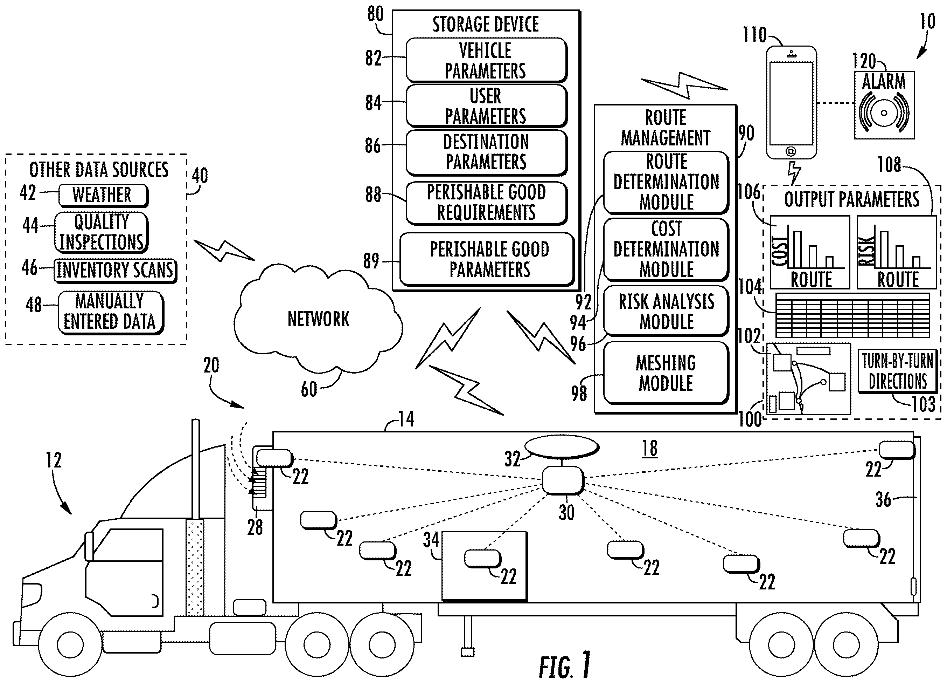

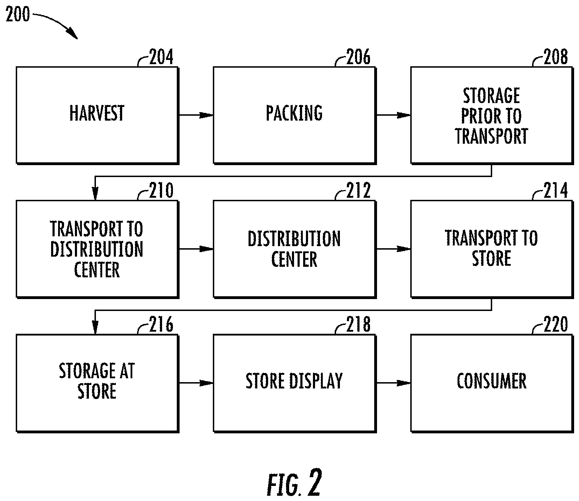

Referring now to the drawings, FIG. 1 illustrates a schematic view of a system 10 for transporting perishable goods, according to an embodiment of the present disclosure. FIG. 2 illustrates a schematic view of a cold chain distribution system 200 that may incorporate embodiments of the present disclosure. Typically, transport refrigeration systems 20 are used to transport and distribute perishable goods and environmentally sensitive goods (herein referred to as perishable goods 34). In the illustrated embodiment, a transport refrigeration system 20 includes an environmentally controlled container 14, a transport refrigeration unit 28 and perishable goods 34. The container 14 may be pulled by a vehicle 12. It is understood that embodiments described herein may be applied to shipping containers that are shipped by rail, sea, or any other suitable container, without use of a vehicle 12. The container 14 may define an interior compartment 18.

In the illustrated embodiment, the transport refrigeration unit 28 is associated with a container 14 to provide desired environmental parameters, such as, for example temperature, pressure, humidity, carbon dioxide, ethylene, ozone, light exposure, vibration exposure, and other conditions to the interior compartment 18. In further embodiments, the transport refrigeration unit 28 is a refrigeration system capable of providing a desired temperature and humidity range. The perishable goods 34 may include but are not limited to fruits, vegetables, grains, beans, nuts, eggs, dairy, seed, flowers, meat, poultry, fish, ice, blood, pharmaceuticals, or any other suitable cargo requiring cold chain transport.

In the illustrated embodiment, the transport refrigeration system 20 includes sensors 22, which may be hardwired or wireless. The sensors 22 may be utilized to monitor perishable good parameters 89. The perishable good parameters 89 monitored by the sensors 22 may include but are not limited to temperature, pressure, humidity, carbon dioxide, ethylene, ozone, light exposure, vibrations, and other conditions in the interior compartment 18. Accordingly, suitable sensors 22 are utilized to monitor the desired perishable good parameters 89. Advantageously, sensors 22 may be selected for certain applications depending on the type of perishable goods 34 to be monitored and the corresponding environmental sensitivities. In an embodiment, temperatures are monitored. As seen in FIG. 1, the sensors 22 may be placed directly on the perishable goods 34.

The sensors 22 may be placed in a variety of locations including but not limited to on the transport refrigeration unit 28, on a door 36 of the container 14 and throughout the interior compartment 18. The sensors 22 may be placed directly within the transport refrigeration unit 28 to monitor the performance of the transport refrigeration unit 28. As seen, the sensors 22 may also be placed on the door 36 of the container 14 to monitor the position of the door 36. Additionally, sensors 22 may also be utilized to monitor vehicle parameters 82 that are capable of being monitored, such as for example a global positioning system (GPS) location, a health status of the refrigeration unit 22, and a health status of the vehicle 12. The GPS location may help in providing time-based location information for the perishable goods parameters 89 and help in locating the container 14 and associated vehicle. The GPS location may also help in providing current traffic information along the route of the vehicle and other potential routes.

As illustrated in FIG. 1, the transport refrigeration system 20 may further include, a controller 30 configured to log a plurality of readings from the sensors 22, known as the perishable good parameters 89, at a selected sampling rate. The controller 30 may be enclosed within the transport refrigeration unit 28 or separate from the transport refrigeration unit 28 as illustrated. The perishable good parameters 89 may further be augmented with time, location stamps or other relevant information. The controller 30 may also include a processor (not shown) and an associated memory (not shown). The processor may be but is not limited to a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be but is not limited to a random access memory (RAM), read only memory (ROM), or other electronic, optical, magnetic or any other computer readable medium.

In an illustrated embodiment, the transport refrigeration system 20 may include a communication module 32 in operative communication with the controller 30 and in wireless operative communication with a network 60. The communication module 32 is configured to transmit the perishable good parameters 89 and vehicle parameters 82 to the network 60 via wireless communication. The wireless communication may be, but is not limited to, radio, microwave, cellular, satellite, or another wireless communication method. The network 60 may be but is not limited to satellite networks, cellular networks, cloud computing network, wide area network, or another type of wireless network. The communication module 32 may include a short range interface, such as, for example a wired interface, an optical interface, and a short range wireless interface.

Perishable good parameters 89 may also be provided by other data sources 40, as illustrated in FIG.1. These other data sources 40 may be collected at any point throughout the cold chain distribution system 200, which as illustrated in FIG. 2 may include harvest 204, packing 206, storage prior to transport 208, transport to distribution center 210, distribution center 212, transport to store 214, storage at store 216, store 218 and consumer 220. These stages are provided for illustrative purposes and a distribution chain may include fewer stages or additional stages, such as, for example a cleaning stage, a processing stage, and additional transportation stages. The other data sources 40 may include, but are not limited to, weather 42, quality inspections 44, inventory scans 46, and manually entered data 48. The weather 42 may have an effect on the travel route by influencing the temperature of the container 14 during transport (e.g., 210 and 214). The weather 42 may also increase the risk of a travel route by causing delays. Moreover, quality inspections 44, similar to the weather 42, may reveal data of the perishable goods 34 that affects freshness. For instance, a particular batch of bananas may already be ripe and should not travel with ethylene producing perishable goods 34, such as for example tomatoes. Quality inspections 44 may be done by a machine or a human being. Quality inspections 44 performed by a machine may be accomplished using a variety of techniques including but not limited to optical, odor, soundwave, infrared, or physical probe.

Further, inventory scans 46 may also reveal perishable good parameters 89 about the perishable goods 34 and may help in tracking what perishable goods are located in the container 14. For instance, the inventory scan 46 may reveal the time, day, and the container 14 where the perishable goods 34 are located. While the system 10 includes sensors 22 to aid in automation, often times the need for manual data entry is unavoidable. The manually entered data 48 may be input via a variety of devices including but not limited to a cellular phone, tablet, laptop, smartwatch, a desktop computer or any other similar data input device known to one of skill in the art.

Perishable good parameters 89 collected throughout each stage of the cold chain distribution system 200 may include environment conditions experienced by the perishable goods 34 such as, for example, temperature, pressure, humidity, carbon dioxide, ethylene, ozone, vibrations, light exposure, weather, time and location. For instance, strawberries may have experienced an excessive shock or were kept at 34°F during transport. Perishable good parameters 89 may further include attributes of the perishable goods 34 such as, for example, temperature, weight, size, sugar content, maturity, grade, ripeness, labeling, and packaging. For instance, strawberries may be packaged in 1 pound clamshells, be a certain weight or grade, be organic, and have certain packaging or labels on the clamshells. This information specific to the perishable goods 34 may be used to help determine what other perishable goods may travel in the same container 14 together. The perishable good parameters 89 may further be augmented with time, location stamps or other relevant information.

In the illustrated embodiment, the system 10 further includes a storage device 80 to store the perishable good parameters 89. At least one of the perishable good parameters 89 may be received from a transport refrigeration system 20. The storage device 80 is connected to the communication module 32 through the network 60. As shown, the storage device 80 also stores vehicle parameters 82, user parameters 84, destination parameters 86, and perishable good requirements 88. The storage device 80 may be but is not limited to a random access memory (RAM), read only memory (ROM), or other electronic, optical, magnetic or any other computer readable medium.

In the illustrated embodiment, the system 10 further includes a route management system 90. The route management system 90 is connected to the communication module 32 through the network 60. The route management system 90 is also coupled to the storage device 80. As shown, the route management system 90 includes a route determination module 92, a cost determination module 94, a risk analysis module 96, and a meshing module 98. The route management system 90 may also include a processor (not shown) and an associated memory (not shown). The associated memory may be the storage device 80. The processor may be but is not limited to a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be but is not limited to a random access memory (RAM), read only memory (ROM), or other electronic, optical, magnetic or any other computer readable medium. The route determination module 92, the cost determination module 94, the risk analysis module 96, and the meshing module 98 may be implemented in software as applications executed by the processor of route management system 90.

The route determination module 92 determines potential routes for the perishable goods 34 in response to at least one of the vehicle parameters 82, the user parameters 84, the destination parameters 86, and perishable good requirements 88. In addition to GPS location tracking as mentioned above, the vehicle parameters 82 may also include specifications about the vehicle 12 and the container 14, such as for example, vehicle size, vehicle capacity, vehicle equipment, vehicle capability, cooling capacity, heating capacity, driver availability, fuel capacity, fuel type, fuel price, estimated fuel consumption, wind skirts, wind fairings, or other similar vehicle information. For instance, specific vehicles 12 might be chosen because of their fuel type, which may lead to cheaper transportation. In another example, driver availability may narrow or expand the field of vehicle dues a variety of factors including but not limited to driver operating hours, hours of service (HOS) safety regulations limiting operating hours, and the option of using team drivers (more than one driver on a route). Further, vehicle parameters 82 may also include information regarding the itinerary for the vehicle 12 such as, for example, a schedule of stops for the vehicle 12 and the perishable goods 34 that are being carried in the container 14 or will be carried in the container 14. The vehicle parameters 82 may also include information regarding traffic conditions along the route of the vehicle, as well as potential routes. The vehicle parameters 82 will help the route determination module 92 identify vehicles 12 capable of meeting the user parameters 84 identified by the user. The user may be a producer or receiver of the perishable goods 34, such as, for example a farmer, a butcher, a fisherman, a hunter, a scavenger, or a store owner. The user may enter the user parameters 84 through a user device 110. The user device 110 may be a device such as, for example, a cellular phone, tablet, laptop, smartwatch, desktop computer or any similar device.

Destination parameters 86 include information regarding the distribution center 212 and/or the store 218 such as, for example the cooling capacity, the heating capacity, the space availability, the location, and the sales potential of the store 218. The destination parameters 86 are important for the route determination module 92 to be considered because the route determination module 92 should not send perishable goods 34 to a distribution center 212 not capable of handling the perishable goods 34. The perishable good requirements 88 may be requirements for handling and/or packaging the perishable good 34 such as, for example government regulations or industry standards. The user parameters may be the type of perishable good 34 being shipped, the quantity of perishable goods 34 being shipped, the pickup location of the perishable goods 34, and the delivery location of the perishable goods 34. The user parameters 84 may also be the specific requirements from the user for handling and/or packaging the perishable good 34. The perishable good requirements 88 and the user parameters 84 will set the levels for what product parameters 82 the perishable goods 34 should experience during the cold chain distribution system 200. For instance, the perishable good requirements 88 and the user parameters 84 may dictate that eggs need to be kept at forty degrees Fahrenheit and stored in recycled cardboard egg crate containers. Further, other user parameters 84 may include requirements on the vehicle 12 and/or a driver of the vehicle 12 such as, for example container 14 capacity, transport refrigeration system 20 equipment, travel routes, or travel time. In an example of a user parameter 84, the tractor 12 and overall transport refrigeration system 20 must be air-ride equipped to reduce vibrations and shock to the perishable good 34. In another example, the doors 36 of the container 14 must remained closed from the time the perishable good 34 is picked-up to the time the product is delivered to prevent theft. In another example, the tractor 12 must avoid a selected high theft route. The user parameters may be entered by a user through a user device 110 and the user device 110 will then transmit the user parameters 84 to the storage device 80.

The cost module 94 determines cost parameters of the perishable goods 34 in response to at least one of the potential routes, the user parameters 84, the perishable good requirements 88, and the vehicle parameters 82. The cost parameter is the cost for the potential route. The risk analysis module 98 determines risk parameters in response to at least one of the potential routes, the user parameters 84, the perishable good requirements 88, and the vehicle parameters 82. The risk parameter is the risk level of the potential route. For instance, a longer route might be more risky or a route through a high theft zone may be more risky. The meshing module determines output parameters 100 in response to at least one of the potential routes, the cost parameters, and the risk parameters. The output parameters 100 may be accessible via the user device 110 and/or sent directly to the user device 110. The output parameters 100 may be configured as at least one of a map 102 displaying the potential routes, turn-by-turn directions 103, a cost parameter versus potential route chart 106, a risk parameter versus potential route chart 108, a data table 104 of at least one of the potential route, the cost parameter, and the risk parameter, a text write-up (not shown), or any other method of displaying output parameters known to one of skill in the art. The turn-by-turn directions 103 may be audible and/or visual so that the driver may hear and/or read the turn-by-turn directions.

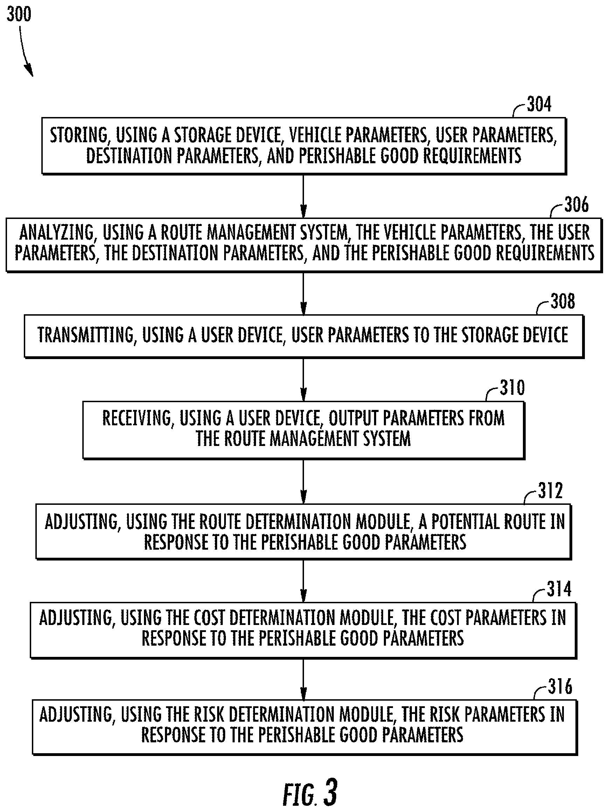

Referring now also to FIG. 3, which shows a flow diagram illustrating a method 300 determining transportation for perishable goods 34, according to an embodiment of the present disclosure. At block 304, the storage device 80 is used to store the vehicle parameters 82, the user parameters 84, the destination parameters 86, and the perishable good requirements 88. At block 306, the route management system 90 is used to analyze the vehicle parameters 82, the user parameters 84, the destination parameters 86, and the perishable good requirements 88. As discussed above, the route management system 90 includes: a route determination module 92 to determine potential routes in response to at least one of the vehicle parameters 82, the user parameters 84, the destination parameters 86, and the perishable good requirements 88; a cost module 94 to determine cost parameters of the perishable goods 34 in response to at least one of the potential routes, the user parameters 84, the perishable good requirements 88, and the vehicle parameters 82; a risk analysis module 96 to determine risk parameters in response to at least one of the potential routes, the user parameters 84, the perishable good requirements 88, and the vehicle parameters 82; and a meshing module 98 to determine output parameters 100 in response to at least one of the potential routes, the cost parameters, and the risk parameters. At block 308, the user device 110 transmits the user parameters 84 to the storage device 80. At block 310, the user device 110 receives the output parameters 100 from the route management system 90.

At block 312, the route determination module 92 adjusts a potential route in response to the perishable good parameters 89. This allows the route determination module 92 to adjust a potential route based on the perishable goods 34 currently being carried in the container 14. For example, one batch of tomatoes may be emitting a large amount of ethylene into the container 14, such that the route determination module 92 may alter the potential route of a shipment of bananas by having another vehicle 12 pick up the bananas. At block 314, the cost determination module 94 adjusts the cost parameters in response to the perishable good parameters 89. At block 316, the risk determination module 96 adjusts the risk parameters in response to the perishable good parameters 89. For instance, the risk parameters may change depending on the ripeness of the perishable goods 34 within container 14. In an example some ripening fruit may release higher amounts of ethylene and pose and increase risk to other perishable goods.

While the above description has described the flow process of FIG. 3 in a particular order, it should be appreciated that unless otherwise specifically required in the attached claims that the ordering of the steps may be varied.

While the disclosure has been described in detail in connection with only a limited number of embodiments, it should be readily understood that the disclosure is not limited to such disclosed embodiments. Accordingly, the disclosure is not to be seen as limited by the foregoing description, but is only limited by the scope of the appended claims.

## Claims

1. A system (10) for determining transportation for perishable goods (34), the system comprising:
a storage device (80) to store vehicle parameters, user parameters, destination parameters, and perishable good requirements, wherein the destination parameters include information regarding a destination of the perishable goods, the information comprising a cooling capacity of the destination, a heating capacity of the destination and a space availability of the destination; and
a route management system (90) coupled to the storage device, the route management system including:
a route determination module (92) configured to determine potential routes in response to the vehicle parameters, the user parameters, the destination parameters, and the perishable good requirements;
a cost module (94) configured to determine cost parameters of the perishable goods in response to the potential routes, the user parameters, the perishable good requirements, and the vehicle parameters;
a risk analysis module (96) configured to determine risk parameters in response to the potential routes, the user parameters, the perishable good requirements, and the vehicle parameters, wherein the risk parameters comprise a risk of theft; and
a meshing module (98) configured to determine output parameters in response to the potential routes, and at least one of the cost parameters and the risk parameters,
wherein the output parameters are configured as at least one of: a cost comparison of potential routes; a risk comparison of potential routes; a cost parameter versus potential route chart; a risk parameter versus potential route chart; and a data table of the potential routes, the cost parameters, and the risk parameters.

2. The system of claim 1, further comprising:
at least one sensor (22) configured to monitor perishable good parameters and transmit the perishable good parameters to the storage device.

3. The system of claim 2, wherein:
the route determination module is configured to adjust a potential route in response to the perishable good parameters; and/or
the cost module is configured to adjust the cost parameters in response to the perishable good parameters; and/or
the risk analysis module is configured to adjust the risk parameters in response to the perishable good parameters.

4. The system of claim 1, wherein:
the user parameters include adjustments to the potential route.

5. The system of claim 1, wherein:
the potential route is selectable using a user device.

6. A method for determining transportation for perishable goods (34), the method comprising:
storing, using a storage device (80), vehicle parameters, user parameters, destination parameters, and perishable good requirements, wherein the destination parameters include information regarding a destination of the perishable goods, the information comprising a cooling capacity of the destination, a heating capacity of the destination, and a space availability of the destination; and
analyzing, using a route management system (90), the vehicle parameters, the user parameters, the destination parameters, and the perishable good requirements, the route management system being coupled to the storage device, and the route management system including:
a route determination module (92) to determine potential routes in response to the vehicle parameters, the user parameters, the destination parameters, and the perishable good requirements;
a cost module (94) to determine cost parameters of the perishable goods in response to the potential routes, the user parameters, the perishable good requirements, and the vehicle parameters;
a risk analysis module (96) to determine risk parameters in response to the potential routes, the user parameters, the perishable good requirements, and the vehicle parameters, wherein the risk parameters comprise a risk of theft; and
a meshing module (98) to determine output parameters in response to the potential routes, and at least one of the cost parameters and the risk parameters,
wherein the output parameters are configured as at least one of: a cost comparison of potential routes; a risk comparison of potential routes; a cost parameter versus potential route chart; a risk parameter versus potential route chart; and a data table of the potential routes, the cost parameters, and the risk parameters.

7. The method of claim 6, further comprising:
transmitting, using a user device (110), user parameters to the storage device.

8. The method of claim 6, further comprising:
monitoring, using at least one sensor (22), perishable good parameters; and
transmitting the perishable good parameters to the storage device.

9. The method of claim 8, further comprising:
adjusting, using the route determination module, a potential route in response to the perishable good parameters; and/or
adjusting, using the cost determination module, the cost parameters in response to the perishable good parameters; and/or
adjusting, using the risk determination module, the risk parameters in response to the perishable good parameters.

10. The method of claim 6, further comprising:
selecting, using a user device (110), the potential route.

11. The method of claim 6, further comprising:
adjusting, using a user device (110), the potential route.

12. A computer program product tangibly embodied on a computer readable medium, the computer program product including instructions that, when executed by a processor, cause the processor to perform a method according to any of claims 6 to 11.

## Patentansprüche

1. System (10) zum Bestimmen des Transports für verderbliche Waren (34), wobei das System umfasst:
eine Speichervorrichtung (80) zum Speichern von Fahrzeugparametern, Benutzerparametern, Zielparametern und Anforderungen für verderbliche Waren, wobei die Zielparameter Informationen bezüglich eines Ziels der verderblichen Waren aufweisen, wobei die Informationen eine Kühlkapazität des Ziels, eine Heizkapazität des Ziels und eine Raumverfügbarkeit des Ziels umfassen; und
ein Routenmanagementsystem (90), das mit der Speichervorrichtung gekoppelt ist, wobei das Routenmanagementsystem aufweist:
ein Routenbestimmungsmodul (92), das zum Bestimmen potenzieller Routen in Reaktion auf die Fahrzeugparameter, die Benutzerparameter, die Zielparameter und die Anforderungen für verderbliche Waren konfiguriert ist;
ein Kostenmodul (94), das zum Bestimmen von Kostenparametern der verderblichen Waren in Reaktion auf die potenziellen Routen, die Benutzerparameter, die Anforderungen für verderbliche Waren und die Fahrzeugparameter konfiguriert ist;
ein Risikoanalysemodul (96), das zum Bestimmen von Risikoparametern in Reaktion auf die potenziellen Routen, die Benutzer-parameter, die Anforderungen für verderbliche Waren und die Fahrzeug-parameter konfiguriert ist, wobei die Risikoparameter ein Diebstahlrisiko umfassen; und
ein Vernetzungsmodul (98), das zum Bestimmen von Ausgabeparametern in Reaktion auf die potenziellen Routen und mindestens eines von den Kostenparametern und den Risikoparametern konfiguriert ist,
wobei die Ausgabeparameter konfiguriert sind als mindestens eines von: einem Kostenvergleich potenzieller Routen; einem Risikovergleich potenzieller Routen; einem Diagramm von Kostenparametern gegenüber potenziellen Routen; einem Diagramm von Risikoparametern gegenüber potenziellen Routen; und einer Datentabelle der potenziellen Routen, der Kostenparameter und der Risikoparameter.

2. System nach Anspruch 1, weiter umfassend:
mindestens einen Sensor (22), der zum Überwachen von Parametern für verderbliche Waren und zum Übertragen der Parameter für verderbliche Waren an die Speichervorrichtung konfiguriert ist.

3. System nach Anspruch 2, wobei:
das Routenbestimmungsmodul zum Anpassen einer potenziellen Route in Reaktion auf die Parameter für verderbliche Waren konfiguriert ist; und/oder
das Kostenmodul zum Anpassen der Kostenparameter in Reaktion auf die Parameter für verderbliche Waren konfiguriert ist; und/oder
das Risikoanalysemodul zum Anpassen der Risikoparameter in Reaktion auf die Parameter für verderbliche Waren konfiguriert ist.

4. System nach Anspruch 1, wobei:
die Benutzerparameter Anpassungen an der potenziellen Route aufweisen.

5. System nach Anspruch 1, wobei:
die potenzielle Route unter Verwendung einer Benutzervorrichtung auswählbar ist.

6. Verfahren zum Bestimmen des Transports für verderbliche Waren (34), wobei das Verfahren umfasst:
Speichern, unter Verwendung einer Speichervorrichtung (80), von Fahrzeugparametern, Benutzerparametern, Zielparametern und Anforderungen für verderbliche Waren, wobei die Zielparameter Informationen bezüglich eines Ziels der verderblichen Waren aufweisen, wobei die Informationen eine Kühlkapazität des Ziels, eine Heizkapazität des Ziels und eine Raumverfügbarkeit des Ziels umfassen; und
Analysieren, unter Verwendung eines Routenmanagementsystems (90), der Fahrzeugparameter, der Benutzerparameter, der Zielparameter und der Anforderungen für verderbliche Waren, wobei das Routenmanagementsystem mit der Speichervorrichtung gekoppelt ist und das Routenmanagementsystem aufweist:
ein Routenbestimmungsmodul (92) zum Bestimmen potenzieller Routen in Reaktion auf die Fahrzeugparameter, die Benutzerparameter, die Zielparameter und die Anforderungen für verderbliche Waren;
ein Kostenmodul (94) zum Bestimmen von Kostenparametern der verderblichen Waren in Reaktion auf die potenziellen Routen, die Benutzerparameter, die Anforderungen für verderbliche Waren und die Fahrzeugparameter;
ein Risikoanalysemodul (96) zum Bestimmen von Risikoparametern in Reaktion auf die potenziellen Routen, die Benutzerparameter, die Anforderungen für verderbliche Waren und die Fahrzeugparameter, wobei die Risikoparameter ein Diebstahlrisiko umfassen; und
ein Vernetzungsmodul (98) zum Bestimmen von Ausgabeparametern in Reaktion auf die potenziellen Routen und mindestens eines von den Kostenparametern und den Risikoparametern,
wobei die Ausgabeparameter konfiguriert sind als mindestens eines von: einem Kostenvergleich potenzieller Routen; einem Risikovergleich potenzieller Routen; einem Diagramm von Kostenparametern gegenüber potenziellen Routen; einem Diagramm von Risikoparametern gegenüber potenziellen Routen; und einer Datentabelle der potenziellen Routen, der Kostenparameter und der Risikoparameter.

7. Verfahren nach Anspruch 6, weiter umfassend:
Übertragen von Benutzerparametern an die Speichervorrichtung unter Verwendung einer Benutzervorrichtung (110).

8. Verfahren nach Anspruch 6, weiter umfassend:
Überwachen von Parametern für verderbliche Waren unter Verwendung mindestens eines Sensors (22); und
Übertragen der Parameter für verderbliche Waren an die Speicher-vorrichtung.

9. Verfahren nach Anspruch 8, weiter umfassend:
Anpassen einer potenziellen Route in Reaktion auf die Parameter für verderbliche Waren unter Verwendung des Routenbestimmungsmoduls; und/oder
Anpassen der Kostenparameter in Reaktion auf die Parameter für verderbliche Waren unter Verwendung des Kostenbestimmungsmoduls; und/oder
Anpassen der Risikoparameter in Reaktion auf die Parameter für verderbliche Waren unter Verwendung des Risikobestimmungsmoduls.

10. Verfahren nach Anspruch 6, weiter umfassend:
Auswählen der potenziellen Route unter Verwendung einer Benutzervorrichtung (110).

11. Verfahren nach Anspruch 6, weiter umfassend:
Anpassen der potentiellen Route unter Verwendung einer Benutzervorrichtung (110).

12. Computerprogrammprodukt, das auf einem computerlesbaren Medium greifbar verkörpert ist,
wobei das Computerprogrammprodukt Anweisungen aufweist, die, wenn sie von einem Prozessor ausgeführt werden, den Prozessor veranlassen, ein Verfahren nach einem der Ansprüche 6 bis 11 durchzuführen.

## Revendications

1. Système (10) pour déterminer le transport de denrées périssables (34), le système comprenant :
un dispositif de stockage (80) pour stocker des paramètres de véhicule, des paramètres d'utilisateur, des paramètres de destination, et des conditions de denrée périssable, dans lequel les paramètres de destination incluent des informations concernant une destination des denrées périssables, les informations comprenant une capacité de refroidissement de la destination, une capacité de chauffage de la destination et une disponibilité d'espace de la destination ; et
un système de gestion d'itinéraire (90) couplé au dispositif de stockage, le système de gestion d'itinéraire incluant :
un module de détermination d'itinéraire (92) configuré pour déterminer des itinéraires potentiels en réponse aux paramètres de véhicule, aux paramètres d'utilisateur, aux paramètres de destination, et aux conditions de denrée périssable ;
un module de coût (94) configuré pour déterminer des paramètres de coût des denrées périssables en réponse aux itinéraires potentiels, aux paramètres d'utilisateur, aux conditions de denrée périssable, et aux paramètres de véhicule ;
un module d'analyse de risque (96) configuré pour déterminer des paramètres de risque en réponse aux itinéraires potentiels, aux paramètres d'utilisateur, aux conditions de denrée périssable, et aux paramètres de véhicule, dans lequel les paramètres de risque comprennent un risque de vol ; et
un module de maillage (98) configuré pour déterminer des paramètres de sortie en réponse aux itinéraires potentiels, et à au moins l'un des paramètres de coût et des paramètres de risque,
dans lequel les paramètres de sortie sont configurés comme au moins l'un parmi : une comparaison de coût d'itinéraires potentiels ; une comparaison de risque d'itinéraires potentiels ; un graphique paramètre de coût versus itinéraire potentiel ; un graphique paramètre de risque versus itinéraire potentiel ; et un tableau de données des itinéraires potentiels, des paramètres de coût et des paramètres de risque.

2. Système selon la revendication 1, comprenant en outre :
au moins un capteur (22) configuré pour surveiller des paramètres de denrée périssable et transmettre les paramètres de denrée périssable au dispositif de stockage.

3. Système selon la revendication 2, dans lequel :
le module de détermination d'itinéraire est configuré pour ajuster un itinéraire potentiel en réponse aux paramètres de denrée périssable ; et/ou
le module de coût est configuré pour ajuster les paramètres de coût en réponse aux paramètres de denrée périssable ; et/ou
le module d'analyse de risque est configuré pour ajuster les paramètres de risque en réponse aux paramètres de denrée périssable.

4. Système selon la revendication 1, dans lequel :
les paramètres d'utilisateur incluent des ajustements à l'itinéraire potentiel.

5. Système selon la revendication 1, dans lequel :
l'itinéraire potentiel peut être sélectionné en utilisant un dispositif utilisateur.

6. Procédé de détermination du transport de denrées périssables (34), le procédé comprenant les étapes consistant à :
stocker, en utilisant un dispositif de stockage (80), des paramètres de véhicule, des paramètres d'utilisateur, des paramètres de destination, et des conditions de denrée périssable, dans lequel les paramètres de destination incluent des informations concernant une destination des denrées périssables, les informations comprenant une capacité de refroidissement de la destination, une capacité de chauffage de la destination et une disponibilité d'espace de la destination ; et
analyser, en utilisant un système de gestion d'itinéraire (90), les paramètres de véhicule, les paramètres d'utilisateur, les paramètres de destination, et les conditions de denrée périssable, le système de gestion d'itinéraire étant couplé au dispositif de stockage, et le système de gestion d'itinéraire incluant :
un module de détermination d'itinéraire (92) pour déterminer des itinéraires potentiels en réponse aux paramètres de véhicule, aux paramètres d'utilisateur, aux paramètres de destination, et aux conditions de denrée périssable ;
un module de coût (94) pour déterminer des paramètres de coût des denrées périssables en réponse aux itinéraires potentiels, aux paramètres d'utilisateur, aux conditions de denrée périssable, et aux paramètres de véhicule ;
un module d'analyse de risque (96) pour déterminer des paramètres de risque en réponse aux itinéraires potentiels, aux paramètres d'utilisateur, aux conditions de denrée périssable, et aux paramètres de véhicule, dans lequel les paramètres de risque comprennent un risque de vol ; et
un module de maillage (98) pour déterminer des paramètres de sortie en réponse aux itinéraires potentiels, et à au moins l'un des paramètres de coût et des paramètres de risque,
dans lequel les paramètres de sortie sont configurés comme au moins l'un parmi : une comparaison de coût d'itinéraires potentiels ; une comparaison de risque d'itinéraires potentiels ; un graphique paramètre de coût versus itinéraire potentiel ; un graphique paramètre de risque versus itinéraire potentiel ; et un tableau de données des itinéraires potentiels, des paramètres de coût et des paramètres de risque.

7. Procédé selon la revendication 6, comprenant en outre l'étape consistant à :
transmettre, en utilisant un dispositif utilisateur (110), des paramètres d'utilisateur au dispositif de stockage.

8. Procédé selon la revendication 6, comprenant en outre l'étape consistant à :
surveiller, en utilisant au moins un capteur (22), des paramètres de denrée périssable ; et
transmettre les paramètres de denrée périssable au dispositif de stockage.

9. Procédé selon la revendication 8, comprenant en outre les étapes consistant à :
ajuster, en utilisant le module de détermination d'itinéraire, un itinéraire potentiel en réponse aux paramètres de denrée périssable ; et/ou
ajuster, en utilisant le module de détermination de coût, les paramètres de coût en réponse aux paramètres de denrée périssable ; et/ou
ajuster, en utilisant le module de détermination de risque, les paramètres de risque en réponse aux paramètres de denrée périssable.

10. Procédé selon la revendication 6, comprenant en outre l'étape consistant à :
sélectionner, en utilisant un dispositif utilisateur (110), l'itinéraire potentiel.

11. Procédé selon la revendication 6, comprenant en outre l'étape consistant à :
ajuster, en utilisant un dispositif utilisateur (110), l'itinéraire potentiel.

12. Produit de programme informatique manifestement incorporé sur un support lisible par ordinateur, le produit de programme informatique incluant des instructions qui, lorsqu'elles sont exécutées par un processeur, amènent le processeur à effectuer un procédé selon l'une quelconque des revendications 6 à 11.
